# EUROPEAN PATENT APPLICATION

(11) **EP 4 756 987 A1**
(43) Date of publication of application: **10.06.2026**
(21) Application number: 24908276.9
(22) Date of filing: 13.12.2024
(51) Int. Cl.: H01M 10/48, H01M 50/569, H01M 10/42, H01M 50/566

(54) **BATTERY CELL ASSEMBLY AND BATTERY PACK INCLUDING SAME**

(30) Priority: 18.12.2023 KR 20230183995; 31.10.2024 KR 20240151916
(71) Applicant: LG Energy Solution, Ltd., Seoul 07335 (KR)
(72) Inventor: SHIN, Ju Hwan, Daejeon 34122 (KR); JEON, Jong Pil, Daejeon 34122 (KR); LEE, Hyoung Suk, Daejeon 34122 (KR)
(74) Representative: Plasseraud IP
(86) International application number: PCT/KR2024/096882
(87) International publication number: WO 2025/135994

(57) **Abstract**

Embodiments provide a battery cell assembly. The battery cell assembly includes a plurality of battery cells each including a positive electrode lead and a negative electrode lead, and an integrated circuit assembly including an integrated circuit coupled to the plurality of battery cells and configured to measure voltages of the plurality of battery cells, and the integrated circuit assembly includes an insulating frame, an integrated circuit mounted on the insulating frame, a plurality of sensing plates connected to the integrated circuit, and a temperature sensor configured to sense a temperature of one of the plurality of sensing plates.

## Description

### [Technical Field]

The present invention relates to a battery cell assembly and a battery pack including the same. The present application claims the benefit of priority based on Korean Patent Application No. 10-2023-0183995, filed on December 18, 2023 and Korean Patent Application No. 10-2024-0151916, filed on October 31, 2024, and the entire contents of the Korean patent applications are incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present invention is directed to providing a battery cell assembly capable of monitoring a temperature distribution inside a cell, and a battery pack including the same.

### [Technical Solution]

Embodiments of the present invention provide a battery cell assembly. The battery cell assembly includes a plurality of battery cells each including a positive electrode lead and a negative electrode lead, and an integrated circuit assembly including an integrated circuit coupled to the plurality of battery cells and configured to measure voltages of the plurality of battery cells, and the integrated circuit assembly includes an insulating frame, an integrated circuit mounted on the insulating frame, a plurality of sensing plates connected to the integrated circuit, and a temperature sensor configured to sense a temperature of one of the plurality of sensing plates.

The plurality of sensing plates may be short-circuited from a corresponding one of the positive electrode lead and the negative electrode lead of each of the plurality of battery cells.

The plurality of sensing plates may be covered with a corresponding one of the positive electrode lead and the negative electrode lead of each of the plurality of battery cells.

The plurality of sensing plates may be in contact with a corresponding one of the positive electrode lead and the negative electrode lead of each of the plurality of battery cells.

The plurality of sensing plates may be welded to a corresponding one of the positive electrode lead and the negative electrode lead of each of the plurality of battery cells.

The plurality of sensing plates may be interposed between the insulating frame and a corresponding one of the positive electrode lead and the negative electrode lead of each of the plurality of battery cells.

The integrated circuit assembly may include first welding patterns on the plurality of sensing plates and one of the positive electrode lead and the negative electrode lead of each of the plurality of battery cells, and second welding patterns spaced apart from the plurality of sensing plates.

A distance between centers of the first welding patterns may be different from a distance between centers of the second welding patterns.

The distance between the centers of the first welding patterns may be less than the distance between the centers of the second welding patterns.

The integrated circuit assembly may further include wires configured to connect the integrated circuit and the temperature sensor.

Embodiments provide a battery pack. The battery pack includes a pack housing including a base plate and a plurality of battery cell assemblies on the pack housing, and each of the plurality of battery cell assemblies includes a plurality of battery cells each including a positive electrode lead and a negative electrode lead, and an integrated circuit assembly including an insulating frame, an integrated circuit mounted on the insulating frame, a plurality of sensing plates interposed between the insulating frame and a corresponding one of the positive electrode lead and the negative electrode lead of each of the plurality of battery cells and connected to the integrated circuit, and a temperature sensor configured to sense a temperature of one of the plurality of sensing plates.

The integrated circuit assembly may include first welding patterns on the plurality of sensing plates and one of the positive electrode lead and the negative electrode lead of each of the plurality of battery cells, and second welding patterns spaced apart from the plurality of sensing plates.

The integrated circuit assembly may further include wires configured to connect the integrated circuit and the temperature sensor.

Embodiments provide a battery cell assembly. The battery cell assembly includes a plurality of battery cells arranged in a first direction and each including a positive electrode lead and a negative electrode lead, and first and second integrated circuit assemblies spaced apart from each other with the plurality of battery cells therebetween, and the first integrated circuit assembly includes a first insulating frame, a first integrated circuit mounted on the first insulating frame, and a first temperature sensor configured to sense a temperature of one of the positive electrode lead and the negative electrode lead of one of the plurality of battery cells.

The first temperature sensor may be attached to the positive electrode lead or the negative electrode lead via an insulating adhesive.

The first integrated circuit assembly may further include wires configured to connect the first integrated circuit and the first temperature sensor.

Each of the wires may include an insulating coating.

### [Advantageous Effects]

According to embodiments of the present invention, a battery cell assembly may include temperature sensors configured to sense temperatures of some of a plurality of sensing plates. Accordingly, a temperature distribution according to a direction in which a plurality of battery cells are arranged can be sensed, and improved temperature distribution monitoring can be provided.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### [Brief Description of the Drawings]

FIG. 1 is a plan view of a battery pack according to embodiments.
FIGS. 2 and 3 are perspective views of a battery cell assembly of FIG. 1.
FIG. 4 is a front view of the battery cell assembly of FIG. 3.
FIG. 5 is an enlarged partial front view of a part of FIG. 4.
FIG. 6 is a partial front view for describing a battery cell assembly according to other embodiments.
FIG. 7 is a perspective view for describing a battery cell assembly according to other embodiments.
FIG. 8 is an exploded perspective view of the battery cell assembly of FIG. 7.
FIG. 9 is a rear view of the battery cell assembly of FIG. 8.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

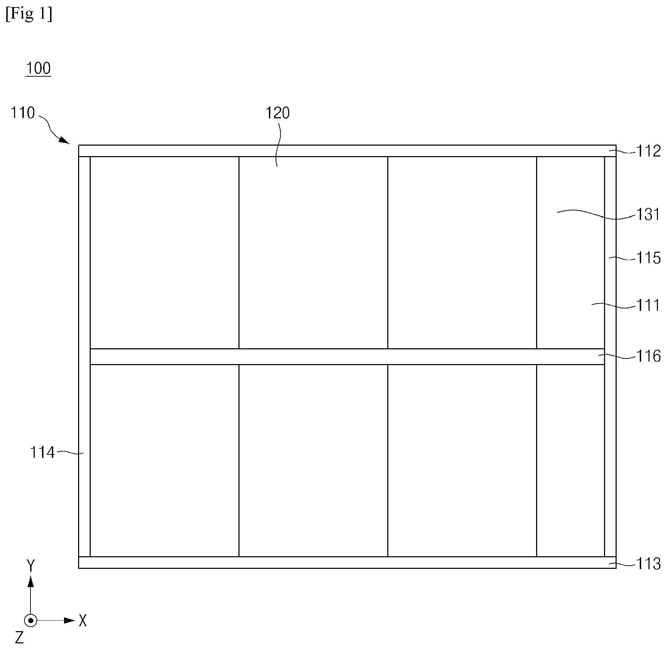

FIG. 1 is a plan view of a battery pack according to embodiments.

Referring to FIG. 1, a battery pack 100 may include a pack housing 110 and a plurality of battery cell assemblies 120. The battery pack 100 may be a final product to be mounted in an application such as a vehicle.

The pack housing 110 may provide a space for mounting the battery cell assemblies 120 therein. The pack housing 110 may include a base plate 111 and side walls 112, 113, 114, and 115.

Here, two directions substantially parallel to a mounting surface 111M (i.e., a surface facing the battery cell assemblies 120) of the base plate 111 are defined as an X-axis direction and a Y-axis direction, and a direction substantially perpendicular to the mounting surface 111M of the base plate 111 is defined as a Z-axis direction. The X-axis direction, the Y-axis direction, and the Z-axis direction may be substantially perpendicular to one another.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate, and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

Hereinafter, the technical idea of the present invention will be described with respect to an embodiment in which the battery pack 100 is of a moduleless type and each of the plurality of battery cell assemblies 120 does not include a module frame, but the embodiment is only an example and does not limit the technical idea of the present invention in any sense. Those of ordinary skill in the art will be able to easily derive an embodiment in which a battery pack is of a module type and each of a plurality of battery cell assemblies includes a module frame, based on the above description.

Thermal interface material (TIM) layers may be provided between the base plate 111B of the pack housing 110 and the plurality of battery cell assemblies 120. The TIM layers may include a resin composition. The TIM layers may be provided by a process of applying a thermal resin.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicon resin, a polyol resin, an epoxy resin, or an acrylic resin.

The center beam 116 may extend in the X-axis direction. The center beam 116 may isolate the plurality of battery cell assemblies 120 in the Y-axis direction. The center beam 116 may be interposed between the plurality of battery cell assemblies 120.

In FIG. 1, the plurality of battery cell assemblies 120 may be arranged in a 3x2 array. The arrangement of the plurality of battery cell assemblies 120 of FIG. 1 is a non-limiting example and should not be understood as limiting the technical idea of the present invention in any sense. Those of ordinary skill in the art will be able to easily derive the plurality of battery cell assemblies 120 arranged in an MxN array (here, M and N are each an integer of 2 or more), based on the above description.

The battery pack 100 may further include a lid coupled to the side walls 112, 113, 114, and 115 of the pack housing 110. The lid may cover elements, such as the battery cell assemblies 120 and electronic components, inside the battery pack 100. The lid may be fixed to the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event of the plurality of battery cell assemblies 120 is a state in which a change of temperature of the plurality of battery cell assemblies 120 accelerates the change of temperature, and is uncontrollable positive feedback. A temperature of the plurality of battery cell assemblies 120 that are in a thermal runaway state sharply increases, and a large amount of a high-pressure gas and combustion debris are discharged therefrom.

The battery pack 100 may further include a battery management system (BMS). The BMS may be configured to monitor, balance, and control the battery pack 100. The monitoring of the battery pack 100 may include monitoring voltages and currents of certain nodes in the plurality of battery cell assemblies 120 and monitoring a distribution of temperatures at set positions in the battery pack 100.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs. The additional electronic components may be interposed between the plurality of battery cell assemblies 120 and the side wall 115. A space between the battery cell assemblies 120 and the side wall 115 may be referred to as an electronic component mounting area.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

### (Second Embodiment)

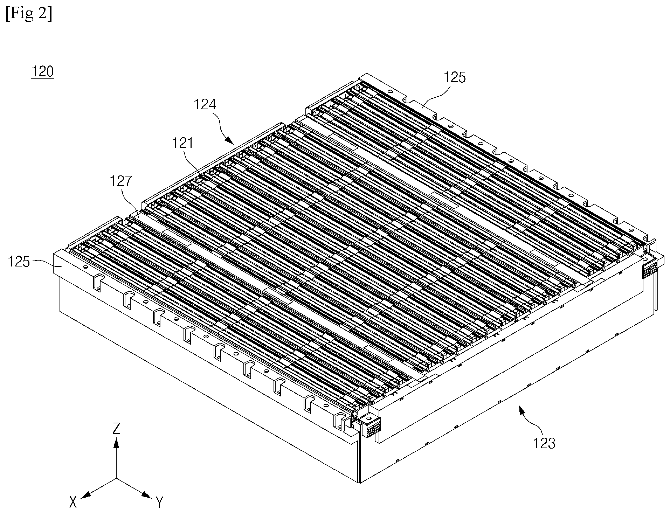

FIG. 2 is a perspective view of the battery cell assembly 120 of FIG. 1.

FIG. 2 is an exploded perspective view of the battery cell assembly 120 of FIG. 1.

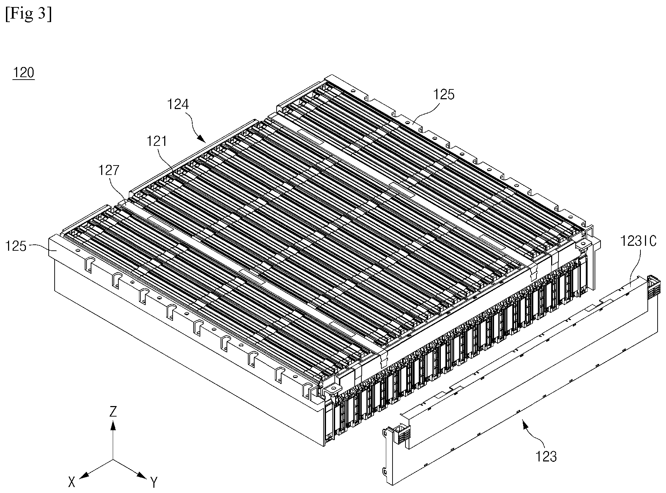

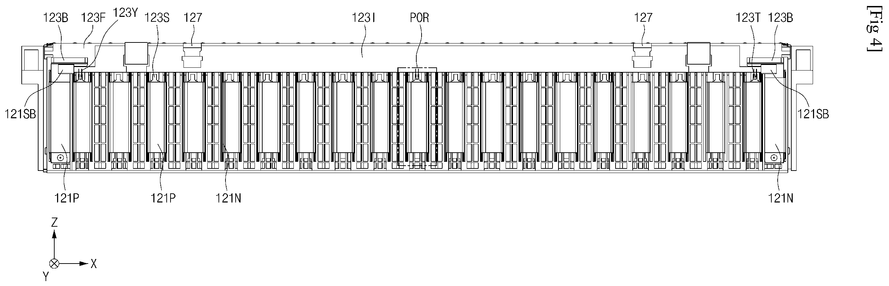

FIG. 4 is a front view of the battery cell assembly 120 of FIG. 3.

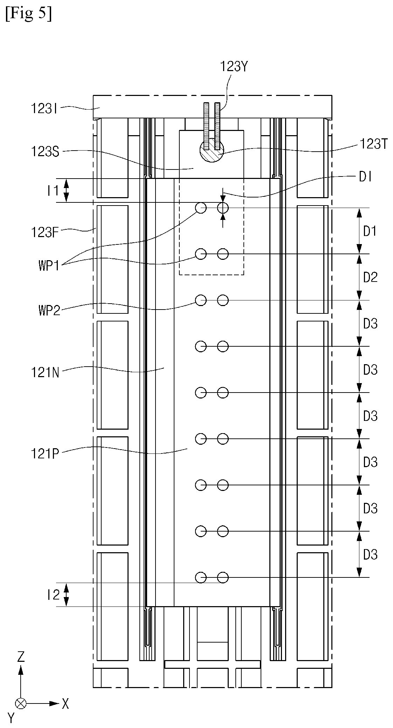

FIG. 5 is an enlarged partial front view of a part POR of FIG. 4.

In FIGS. 2 to 5, the definition of directions is based on a case in which the battery cell assembly 120 is on the pack housing 110 (see FIG. 1). In FIGS. 2 to 5, the X-axis direction may be a direction in which a plurality of battery cells 121 are arranged, the Y-axis direction may be a direction in which a first integrated circuit assembly 123 and a second integrated circuit assembly 124 are spaced apart from each other, and the Z-axis direction may be substantially perpendicular to each of the X-axis direction and the Y-axis direction.

Referring to FIGS. 2 to 5, the battery cell assembly 120 may include a plurality of battery cells 121, the first integrated circuit assembly 123, the second integrated circuit assembly 124, cross-beams 125, and flexible flat cable (FFC) assemblies 127.

Each of the plurality of battery cells 121 may be a lithium ion battery. Each of the plurality of battery cells 121 includes an electrode assembly, an electrolyte, and a case. Each of the plurality of battery cells 121 may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween.

Each of the plurality of battery cells 121 may include a positive electrode lead 121P and a negative electrode lead 121N. An electrode assembly of each of the plurality of battery cells 121 may be connected to the positive electrode lead 121P and the negative electrode lead 121N.

The plurality of battery cells 121 may form a plurality of banks. Each of the plurality of banks may include one or more battery cells 121. The one or more battery cells 121 of each of the plurality of banks may be connected with each other in parallel. The plurality of banks may be connected to each other in series.

The negative electrode leads 121N of the one or more battery cells 121 of each of the plurality of banks may be short-circuited with the positive electrode leads 121P of the one or more battery cells 121 of a subsequent bank. The negative electrode leads 121N of the one or more battery cells 121 of each of the plurality of banks may be welded to the positive electrode leads 121P of the one or more battery cells 121 of the subsequent bank.

The positive electrode leads 121P of the one or more battery cells 121 of each of the plurality of banks may be short-circuited with the negative electrode leads 121N of the one or more battery cells 121 of a preceding bank. The positive electrode leads 121P of the one or more battery cells 121 of each of the plurality of banks may be welded to the negative electrode leads 121N of the one or more battery cells 121 of the preceding bank.

The number of banks connected in series and the number of battery cells 121 included in the plurality of banks may be determined according to a voltage and a current to be output from each of the battery cell assemblies 120.

The plurality of battery cells 121 may be arranged in the X-axis direction. A plurality of pads may be provided between the plurality of battery cells 121. The plurality of pads may horizontally press the plurality of battery cells 121 and prevent or alleviate the swelling of the plurality of battery cells 121. The plurality of pads may isolate the plurality of battery cells 121 from each other. According to embodiments, each of the plurality of pads may include polyurethane (PU). According to embodiments, each of the plurality of pads may include a refractory material such as a silicone.

According to embodiments, the plurality of pads and the plurality of banks may be alternately arranged. According to embodiments, one of the plurality of banks may be interposed between neighboring pads, and one of the other pads may be interposed between neighboring banks. According to other embodiments, two or more banks may be interposed between neighboring pads.

The first integrated circuit assembly 123 and the second integrated circuit assembly 124 may be spaced apart from each other in the Y-axis direction with the plurality of battery cells 121 interposed therebetween. The first integrated circuit assembly 123 and the second integrated circuit assembly 124 may be electrically connected to each other by the FFC assemblies 127. Accordingly, sensed values (e.g., a voltage, current, and/or temperature) of the second integrated circuit assembly 124 may be transmitted to the first integrated circuit assembly 123 through the FFC assemblies 127.

The first integrated circuit assembly 123 may include an insulating frame 123F, an integrated circuit 123I, bus bars 123B, sensing plates 123S, sensing bars 123SB, temperature sensors 123T, wires 123Y, and an insulating cover 123IC.

The insulating frame 123F may include an insulating material such as plastic. The insulating frame 123F may cover front sides of the plurality of battery cells 121. The insulation frame 123F may support the integrated circuit 123I, the bus bars 123B, the sensing plates 123S, the sensing bars 123SB, the temperature sensors 123T, and the wires 123Y.

The bus bars 123B may be short-circuited with positive electrode leads 121P of one or more battery cells 121 of a first bank and negative electrode leads 121N of one or more battery cells 121 of a last bank. The bus bars 123B may be welded to the positive electrode leads 121P of the one or more battery cells 121 of the first bank and the negative electrode leads 121N of the one or more battery cells 121 of the last bank. Resulting voltages of the plurality of battery cells 121 may be output through the bus bars 123B. The bus bars 123B may be fixed to the insulating frame 123F.

The integrated circuit 123I may be mounted on the insulating frame 123F. The positive electrode leads 121P and the negative electrode leads 121N that are welded to each other may form nodes inside the battery cell assembly 120. The integrated circuit 123I may be configured to measure voltages of the nodes.

The sensing bars 123SB may include a conductive material. The sensing bars 123SB may have a rod shape. The sensing bars 123SB may be short-circuited form the bus bars 123B. The sensing bars 123SB may be coupled to the bus bars 123B. Voltages of the bus bars 123B may be measured through the sensing bars 123SB.

Each of the plurality of sensing plates 123S may be coupled to the insulating frame 123F. Each of the plurality of sensing plates 123S may be in contact with the insulating frame 123F. Each of the plurality of sensing plates 123S may be fixed to the insulating frame 123F by interference fit or the like. Each of the plurality of sensing plates 123S may be connected to the integrated circuit 123I. Each of the sensing plates 123S may be configured to be electrically connected to the integrated circuit 123I.

Each of the plurality of sensing plates 123S may have a patch shape or a pad shape. Each of the plurality of sensing plates 123S may include a conductive material. Each of the plurality of sensing plates 123S may be short-circuited from the positive electrode lead 121P or the negative electrode lead 121N of each of corresponding ones of the plurality of battery cells 121. For example, each of the plurality of sensing plates 123S may be short-circuited from the positive electrode lead 121P of each of the battery cells 121 of a corresponding odd-numbered bank and the negative electrode lead 121N of each of the battery cells 121 of a corresponding even-numbered bank.

Each of the plurality of sensing plates 123S may be covered with the positive electrode leads 121P or the negative electrode leads 121N of the corresponding ones of the plurality of battery cells 121. For example, each of the plurality of sensing plates 123S may be covered with the positive electrode lead 121P of each of the battery cells 121 of the corresponding odd-numbered bank and the negative electrode lead 121N of each of the battery cells 121 of the corresponding even-numbered bank.

Each of the plurality of sensing plates 123S may be in contact with the positive electrode lead 121P or the negative electrode lead 121N of each of the corresponding ones of the plurality of battery cells 121. For example, each of the plurality of sensing plates 123S may be in contact with the positive electrode lead 121P of each of the battery cells 121 of the corresponding odd-numbered bank and the negative electrode lead 121N of each of the battery cells 121 of the corresponding even-numbered bank.

The plurality of sensing plates 123S may be fixed to the positive electrode leads 121P or the negative electrode leads 121N of corresponding ones of the plurality of battery cells 121. For example, each of the plurality of sensing plates 123S may be fixed to the positive electrode lead 121P of each of the battery cells 121 of the corresponding odd-numbered bank and the negative electrode lead 121N of each of the battery cells 121 of the corresponding even-numbered bank.

Each of the plurality of sensing plates 123S may be welded to the positive electrode leads 121P or the negative electrode leads 121N of the corresponding ones of the plurality of battery cells 121. For example, each of the plurality of sensing plates 123S may be welded to the positive electrode lead 121P of each of the battery cells 121 of the corresponding odd-numbered bank and the negative electrode lead 121N of each of the battery cells 121 of the corresponding even-numbered bank.

Accordingly, the first integrated circuit assembly 123 may include first welding patterns WP1 and second welding patterns WP2. The first welding patterns WP1 may be on the positive electrode lead 121P, the negative electrode lead 121N, and the sensing plate 123S. The first welding patterns WP1 may allow the positive electrode lead 121P, the negative electrode lead 121N, and the sensing plate 123S to be coupled to one another. The second welding patterns WP2 may be spaced apart from the sensing plate 123S. The second welding patterns WP2 may be on the positive electrode lead 121P and the negative electrode lead 121N. The second welding patterns WP2 may allow the positive electrode lead 121P and the negative electrode lead 121N to be coupled to each other.

The first and second welding patterns WP1 and WP2 may have the same shape. The first and second welding patterns WP1 and WP2 may have a spiral shape. Diameters DI of the first and second welding patterns WP1 and WP2 may be substantially the same.

The first and second welding patterns WP1 and WP2 may be arranged in the Z-axis direction. A distance D1 between centers of the first welding patterns WP1 may be different from a distance D3 between centers of the second welding patterns WP2. The distance D1 between the centers of the first welding patterns WP1 may be less than the distance D3 between the centers of the second welding patterns WP2.

A distance D2 between the center of the first welding pattern WP1 and the center of the second welding pattern WP2 may be different from the distance D1 between the centers of the first welding patterns WP1. The distance D2 between the center of the first welding pattern WP1 and the center of the second welding pattern WP2 may be greater than the distance D1 between the centers of the first welding patterns WP1.

The distance D2 between the center of the first welding pattern WP1 and the center of the second welding pattern WP2 may be different from the distance D3 between the centers of the second welding patterns WP2. The distance D2 between the center of the first welding pattern WP1 and the center of the second welding pattern WP2 may be less than the distance D3 between the centers of the second welding patterns WP2.

A distance I1 between an uppermost first welding pattern WP1 and an upper end of the positive electrode lead 121P in the Z-axis direction may be substantially the same as a distance I2 between a lowermost second welding pattern WP2 and the lower end of the positive electrode lead 121P in the Z-axis direction, but embodiments are not limited thereto.

FIG. 5 illustrates that the first welding patterns WP1 and the second welding patterns WP2 are formed in two rows but is only an example and the technical idea of the present invention is not limited thereto in any sense. Those of ordinary skill in the art will be able to easily derive an example in which the first and second welding patterns WP1 and WP2 are formed in one row or three or more rows, based on the above description.

Each of the temperature sensors 123T may be on one of the sensing plates 123S. Each of the temperature sensors 123T may be in contact with one of the sensing plates 123S. Each of the temperature sensors 123T may be attached to one of the sensing plates 123S via an insulating adhesive. Each of the temperature sensors 123T may be configured to sense a temperature of one of the sensing plates 123S. The temperature sensors 123T may be connected to the integrated circuit 123I through the wires 123Y.

According to embodiments, each of the wires 123Y may include an insulating coating to prevent an undesired short circuit with peripheral elements (e.g., the sensing plate 123S, the positive electrode leads 121P, and the negative electrode leads 121N).

According to embodiments, the battery cell assembly 120 may include temperature sensors 123T at different positions in the X-axis direction and/or temperature sensors 123T at different positions in the Z-axis direction. Accordingly, temperature distribution data according to positions inside the battery cell assembly 120 may be collected, in addition to monitoring of a highest temperature of the battery cell assembly 120, and thus, the reliability of monitoring, operation, and control of the battery cell assembly 120 may be improved.

The insulating cover 123IC may include an insulating material such as plastic. The insulating cover 123IC may be interference-fitted into the insulating frame 123F. The insulating cover 123IC may cover the integrated circuit 123I, the bus bars 123B, the sensing plates 123S, the sensing bars 123SB, the temperature sensors 123T, and the wires 123Y to protect electrical elements of the first integrated circuit assembly 123.

The second integrated circuit assembly 124 may include an insulating frame, an integrated circuit, sensing plates, temperature sensors, wires, and an insulating cover. The second integrated circuit assembly 124 is substantially the same as the first integrated circuit assembly 123, except that the second integrated circuit assembly 124 does not include bus bars and sensing bars.

Accordingly, the sensing plates of the second integrated circuit assembly 124 may be coupled to the insulating frame, covered with the positive electrode lead 121P and negative electrode lead 121N corresponding thereto, and welded to the corresponding positive electrode lead 121P and negative electrode lead 121N. The temperature sensors of the second integrated circuit assembly 124 may be configured to sense temperatures of the sensing plates of the second integrated circuit assembly 124.

The cross-beams 125 may be spaced apart from each other with the plurality of battery cells 121 interposed therebetween. The cross-beams 125 may have the same shape. The cross-beams 125 may be symmetrically arranged around the plurality of battery cells 121. The cross-beams 125 may be provided by, for example, the extrusion process but are not limited thereto.

The cross-beams 125 may include a stepped structure. The stepped structure of the cross-beams 125 may be used to couple the cross-beams 125 to supporting beams on the step 111 (see FIG. 1). The cross-beams 125 may be coupled to the supporting beams by bolting or the like.

### (Third Embodiment)

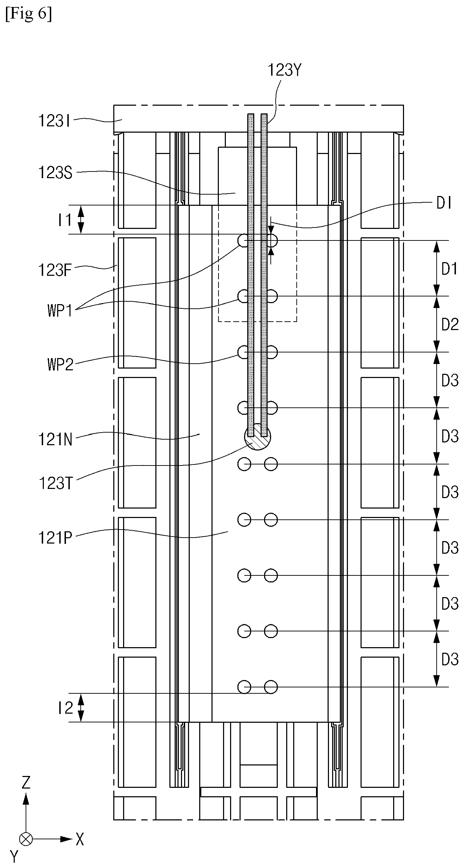

FIG. 6 is a partial front view for describing a battery cell assembly according to other embodiments.

Referring to FIG. 6, the battery cell assembly is substantially the same as that described above with reference to FIGS. 2 to 5, except for the positions of temperature sensors 123T.

Each of the temperature sensors 123T may be on one of positive electrode leads 121P. Each of the temperature sensors 123T may be in contact with one of the positive electrode leads 121P. Each of the temperature sensors 123T may be attached to one of the positive electrode leads 121P via an insulating adhesive. Each of the temperature sensors 123T may be configured to sense a temperature of one of the positive electrode leads 121P. Unlike in FIG. 6, each of the temperature sensors 123T may be on negative electrode leads 121N and be configured to sense a temperature of one of the negative electrode leads 121N. Each of the temperature sensors 123T may be connected to an integrated circuit 123I through wires 123Y.

### (Fourth Embodiment)

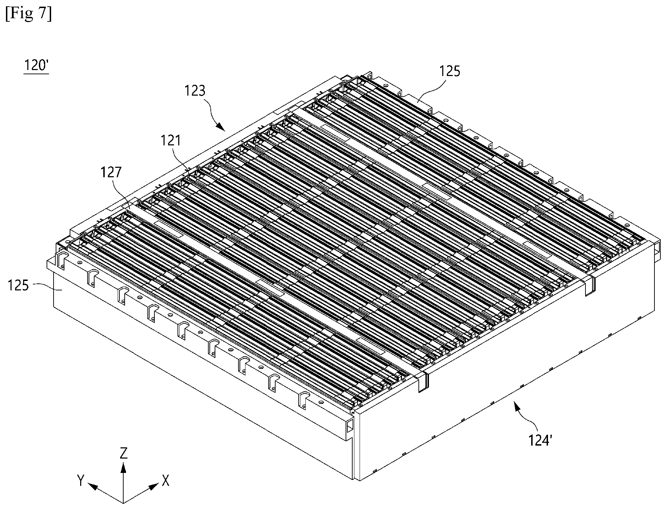

FIG. 7 is a perspective view for describing a battery cell assembly 120' according to other embodiments.

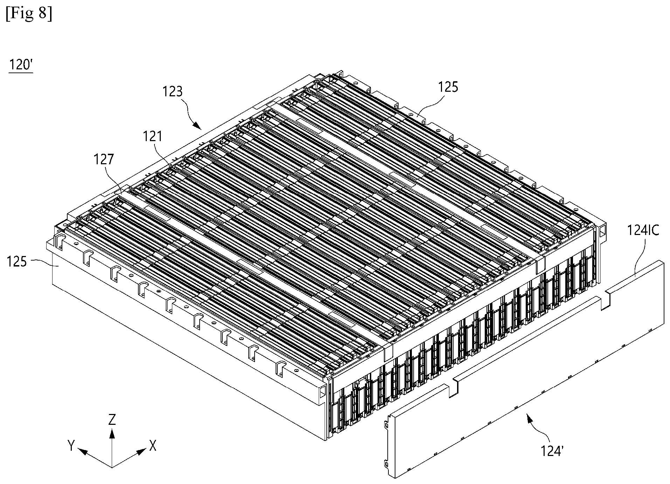

FIG. 8 is an exploded perspective view of the battery cell assembly 120' of FIG. 7.

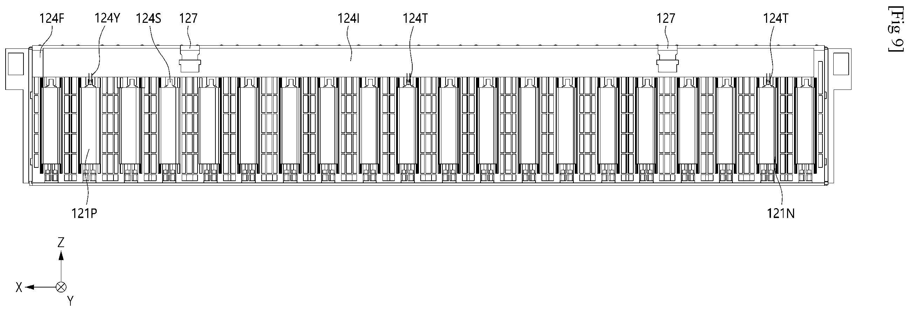

FIG. 9 is a rear view of the battery cell assembly 120' of FIG. 7.

Referring to FIGS. 7 to 9, the battery cell assembly 120' may include a plurality of battery cells 121, a first integrated circuit assembly 123, a second integrated circuit assembly 124', cross-beams 125, and FFC assemblies 127.

The plurality of battery cells 121, the first integrated circuit assembly 123, the cross-beams 125, and the FFC assemblies 127 are substantially the same as those described above with reference to FIGS. 2 to 5 and thus redundant description thereof is omitted here. The second integrated circuit assembly 124' may include an insulating frame 124F, an integrated circuit 124I, sensing plates 124S, temperature sensors 124T, wires 124Y, and an insulating cover 124IC. The second integrated circuit assembly 124' may include the temperature sensors 124T and the wires 124Y, unlike the integrated circuit assembly 124 of FIGS. 2 to 5.

The insulating frame 124F may include an insulating material such as plastic. The insulating frame 124F may cover rear sides of the plurality of battery cells 121. The insulation frame 124F may support the integrated circuit 124I, the sensing plates 124S, the temperature sensors 124T, and the wires 124Y.

The integrated circuit 124I may be mounted on the insulating frame 124F. Positive electrode leads 121P and negative electrode leads 121N that are welded to each other may form nodes inside the battery cell assembly 120. The integrated circuit 124I may be configured to measure voltages of the nodes.

Each of the plurality of sensing plates 124S may be coupled to the insulating frame 124F. Each of the plurality of sensing plates 124S may be in contact with the insulating frame 124F. Each of the plurality of sensing plates 124S may be fixed to the insulating frame 124F by interference fit or the like.

Each of the plurality of sensing plates 124S may be connected to the integrated circuit 124I. Each of the plurality of sensing plates 124S may be configured to be electrically connected to the integrated circuit 124I.

Each of the plurality of sensing plates 124S may have a patch shape or a pad shape. The plurality of sensing plates 124S may include a conductive material. Each of the plurality of sensing plates 124S may be short-circuited from the positive electrode lead 121P or the negative electrode lead 121N of each of corresponding ones of the plurality of battery cells 121. For example, each of the plurality of sensing plates 124S may be welded to the positive electrode lead 121P of each of the battery cells 121 of a corresponding odd-numbered bank and the negative electrode lead 121N of each of the battery cells 121 of a corresponding even-numbered bank.

Each of the plurality of sensing plates 124S may be covered with the positive electrode lead 121P or the negative electrode lead 121N of each of the corresponding ones of the plurality of battery cells 121. For example, each of the plurality of sensing plates 124S may be covered with the positive electrode lead 121P of each of the battery cells 121 of the corresponding odd-numbered bank and the negative electrode lead 121N of each of the battery cells 121 of the corresponding even-numbered bank.

Each of the plurality of sensing plates 124S may be in contact with the positive electrode lead 121P or the negative electrode lead 121N of each of corresponding ones of the plurality of battery cells 121. For example, each of the plurality of sensing plates 124S may be welded to the positive electrode lead 121P of each of the battery cells 121 of the corresponding odd-numbered bank and the negative electrode lead 121N of each of the battery cells 121 of the corresponding even-numbered bank.

Each of the plurality of sensing plates 124S may be fixed to the positive electrode lead 121P or the negative electrode lead 121N of each of the corresponding ones of the plurality of battery cells 121. For example, each of the plurality of sensing plates 124S may be fixed to the positive electrode lead 121P of each of the battery cells 121 of the corresponding odd-numbered bank and the negative electrode lead 121N of each of the battery cells 121 of the corresponding even-numbered bank.

Each of the plurality of sensing plates 124S may be welded to the positive electrode lead 121P or the negative electrode lead 121N of each of the corresponding ones of the plurality of battery cells 121. For example, each of the plurality of sensing plates 124S may be welded to the positive electrode lead 121P of each of the battery cells 121 of the corresponding odd-numbered bank and the negative electrode lead 121N of each of the battery cells 121 of the corresponding even-numbered bank.

Each of the temperature sensors 124T may be on one of the sensing plates 124S. Each of the temperature sensors 124T may be in contact with one of the sensing plates 124S. Each of the temperature sensors 124T may be attached to one of the sensing plates 124S via an insulating adhesive. Each of the temperature sensors 124T may be configured to sense a temperature of one of the sensing plates 124S. The temperature sensors 124T may be connected to the integrated circuit 124I through the wires 124Y.

According to embodiments, each of the wires 124Y may include an insulating coating to prevent an undesired short circuit with peripheral elements (e.g., the sensing plate 124S, the positive electrode leads 121P, and the negative electrode leads 121N).

The insulating cover 124IC may include an insulating material such as plastic. The insulating cover 124IC may be interference-fitted into the insulating frame 124F. The insulating cover 124IC may cover the integrated circuit 124I, the temperature sensors 124T, and the wires 124Y to protect electrical elements of the second integrated circuit assembly 124'.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery cell assembly comprising:
a plurality of battery cells each including a positive electrode lead and a negative electrode lead; and
an integrated circuit assembly including an integrated circuit coupled to the plurality of battery cells and configured to measure voltages of the plurality of battery cells,
wherein the integrated circuit assembly includes:
an insulating frame;
an integrated circuit mounted on the insulating frame;
a plurality of sensing plates connected to the integrated circuit; and
a temperature sensor configured to sense a temperature of one of the plurality of sensing plates.

2. The battery cell assembly of claim 1, wherein
the plurality of sensing plates are short-circuited from a corresponding one of the positive electrode lead and the negative electrode lead of each of the plurality of battery cells.

3. The battery cell assembly of claim 1, wherein
the plurality of sensing plates are covered with a corresponding one of the positive electrode lead and the negative electrode lead of each of the plurality of battery cells.

4. The battery cell assembly of claim 1, wherein
the plurality of sensing plates are in contact with a corresponding one of the positive electrode lead and the negative electrode lead of each of the plurality of battery cells.

5. The battery cell assembly of claim 1, wherein
the plurality of sensing plates are welded to a corresponding one of the positive electrode lead and the negative electrode lead of each of the plurality of battery cells.

6. The battery cell assembly of claim 1, wherein
the plurality of sensing plates are interposed between the insulating frame and a corresponding one of the positive electrode lead and the negative electrode lead of each of the plurality of battery cells.

7. The battery cell assembly of claim 1, wherein
the integrated circuit assembly includes first welding patterns on the plurality of sensing plates and one of the positive electrode lead and the negative electrode lead of each of the plurality of battery cells, and second welding patterns spaced apart from the plurality of sensing plates.

8. The battery cell assembly of claim 7, wherein
a distance between centers of the first welding patterns is different from a distance between centers of the second welding patterns.

9. The battery cell assembly of claim 7, wherein
a distance between centers of the first welding patterns is less than a distance between centers of the second welding patterns.

10. The battery cell assembly of claim 1, wherein
the integrated circuit assembly further includes wires configured to connect the integrated circuit and the temperature sensor.

11. A battery pack comprising:
a pack housing including a base plate; and
a plurality of battery cell assemblies on the pack housing,
wherein each of the plurality of battery cell assemblies includes:
a plurality of battery cells each including a positive electrode lead and a negative electrode lead; and
an integrated circuit assembly including an insulating frame, an integrated circuit mounted on the insulating frame, a plurality of sensing plates interposed between the insulating frame and a corresponding one of the positive electrode lead and the negative electrode lead of each of the plurality of battery cells and connected to the integrated circuit, and a temperature sensor configured to sense a temperature of one of the plurality of sensing plates.

12. The battery pack of claim 11, wherein
the integrated circuit assembly includes first welding patterns on the plurality of sensing plates and one of the positive electrode lead and the negative electrode lead of each of the plurality of battery cells, and second welding patterns spaced apart from the plurality of sensing plates.

13. The battery pack of claim 11, wherein
the integrated circuit assembly further includes wires configured to connect the integrated circuit and the temperature sensor.

14. A battery cell assembly comprising:
a plurality of battery cells arranged in a first direction and each including a positive electrode lead and a negative electrode lead; and
first and second integrated circuit assemblies spaced apart from each other with the plurality of battery cells between the first and second integrated circuit assemblies,
wherein the first integrated circuit assembly includes a first insulating frame, a first integrated circuit mounted on the first insulating frame, and a first temperature sensor configured to sense a temperature of one of the positive electrode lead and the negative electrode lead of one of the plurality of battery cells.

15. The battery cell assembly of claim 14, wherein
the first temperature sensor is attached to the positive electrode lead or the negative electrode lead via an insulating adhesive.

16. The battery cell assembly of claim 14, wherein
the first integrated circuit assembly further includes wires configured to connect the first integrated circuit and the first temperature sensor.

17. The battery cell assembly of claim 16, wherein
each of the wires includes an insulating coating.
